## Europäisches Patentamt

## European Patent Office

## Office européen des brevets

(19)

(11) Veröffentlichungsnummer: **0 053 265**
**B1**

(12)

# EUROPÄISCHE PATENTSCHRIFT

(45) Veröffentlichungstag der Patentschrift:
**03.10.84**

(51) Int. Cl.³: **C 02 F 1/76**, C 07 C 126/08

(21) Anmeldenummer: **81108539.8**

(22) Anmeldetag: **20.10.81**

(54) Verfahren zur Aufbereitung von Kondensat aus Harnstoff-Produktionsanlagen.

(30) Priorität: **27.11.80 DE 3044602**

(43) Veröffentlichungstag der Anmeldung:
**09.06.82 Patentblatt 82/23**

(45) Bekanntmachung des Hinweises auf die Patenterteilung:
**03.10.84 Patentblatt 84/40**

(84) Benannte Vertragsstaaten:
**BE DE FR IT NL SE**

(56) Entgegenhaltungen:
**DD - A - 146 752**
**US - A - 4 188 292**

**GMELINS "Handbuch der anorganischen Chemie" 8. Auflage, System-Nr. 6 "Chlor" 1927, VERLAG CHEMIE, Weinheim/Bergstr. Seite 291**
**KIRK-OTHMER "Encyclopedia of Chemical Technology" 3. Auflage, Band 5 1979, JOHN WILEY & SONS, New York Seite 591**
**Patent Abstracts of Japan Band 4, Nr. 93, 5. Juli 1980 Seite 94C17**
**GMELINS "Handbuch der anorganischen Chemie" 8. Auflage, Lieferung 7, System-Nr. 3 "Sauerstoff" 1966, VERLAG CHEMIE, Weinheim/Bergstr. Seite 2479**

(73) Patentinhaber: **Uhde GmbH,**
**Friedrich-Uhde-Strasse 15 Postfach 262,**
**D-4600 Dortmund 1 (DE)**

(72) Erfinder: **Huber, Adalbert, Dipl.-Ing.,**
**Hohenleuchtestrasse 13, D-4755 Holzwickede (DE)**
Erfinder: **Schirmer, Dietrich, Dipl.-Ing., An der Pütterey 7,**
**D-5860 Iserlohn - Hennen (DE)**
Erfinder: **Hoffmann, Heiko, Am Katabach 62,**
**D-5700 Gladbach (DE)**

## Beschreibung

Die Erfindung betrifft ein Verfahren zur Aufbereitung von Kondensat aus Harnstoff-Produktionsanlagen mit einem Gehalt an Harnstoff in der Grössenordnung von 50 mg/l und von Biuret in der Grössenordnung von 2 mg/l durch Oxidation.

Anfallendes Kondensat aus Produktionsanlagen stellt einen Hilfsstoff dar und ist in der Regel zu wertvoll, um als Abfallstoff abgeleitet zu werden.

Bei der Herstellung von Harnstoff $(NH_2)_2CO$ + $H_2O$ fällt ein Kondensat an, welches mit Harnstoff und Biuret bis zu Konzentrationen von 200 mg/l bzw. 5 mg/l verunreinigt ist. Durch Kochen kann ein wesentlicher Anteil dieser Verunreinigungen, so z.B. bis auf 50 mg/l Harnstoff und auf ca. 2 mg/l Biuret, ausgetrieben werden. Dieses teilweise gereinigte Kondensat lässt sich ohne weiteres als Kesselspeisewasser für Niederdruckdampfkessel verwenden.

Moderne Harnstoff-Produktionsanlagen sind Teil einer chemischen Grossanlage in der Reaktionswärme bei möglichst hohen Betriebsdrücken so z.B. bei 80 - 130 bar, zur Dampferzeugung in Hochdruckdampfkesseln energiesparend angewendet wird. Da die chemische Grossanlage wegen des Anfalls beträchtlicher Reaktionswärmemengen hohen Bedarf an Kesselspeisewasser hoher Qualität hat, sollte möglichst alles anfallende Kondensat aufgearbeitet werden.

Weiterhin ist bekannt, die Verunreinigungen Harnstoff und Biuret mittels Oxidationsmitteln wie Hypobromit, Chlorlauge oder salpetriger Säure weitgehend zu Stickstoff und Kohlensäure zu oxidieren. Diese Methode scheitert jedoch an der Tatsache, dass sich eine vollständige Oxidierung bei niedriger Restkonzentration nicht erreichen lässt.

Es ist zwar nach «Gmelins Handbuch der anorganischen Chemie», 8. Auflage System Nr. 6 «Chlor» 1927, Verlag Chemie; Seite 291, eine Gleichung bekannt, wonach Hypochlorit mit Harnstoff in alkalischer Lösung durch Oxidation reagiert. Diese Gleichung geht vom Gleichgewichtszustand aus und hat keine Aussage über die Kinetik.

Der Erfindung liegt die Aufgabe zugrunde, ein bereits durch Kochen aufbereitetes Kondensat aus einer Harnstoff-Produktionsanlage soweit aufzubereiten, dass es Kesselspeisewasserqualität für Hochdruckdampfkessel aufweist.

Überraschenderweise wurde gefunden, dass diese Aufgabe gelöst wird wenn die Oxidation bei einer Temperatur des Kondensats über 60°C und bei einem pH-Wert über 8 durchgeführt wird.

Als bevorzugte Oxidationsmittel erweisen sich Chlor, Ozon und Hypobromit.

Die nachfolgende Gegenüberstellung von durchgeführten Versuchen zeigt die Wirksamkeit des erfindungsgemässen Verfahrens.

*Versuchsreihe 1, Konventionelle Aufbereitung*

Zusammensetzung des Versuchswassers:

Um ein Wasser mit einer gewissen Pufferwirkung zu erhalten, wird für die Oxidationsversuche mit Chlorlauge nicht ein vollentsalztes Wasser, sondern ein Wassergemisch mit einem Teil Trinkwasser und mit 9 Teilen vollensalztes Wasser verdünnt und dann mit 15 mg Harnstoff/l versetzt.

Der pH-Wert beträgt 6,8 und die Leitfähigkeit 130 $\mu$ S/cm.

Bei steigenden Zugabemengen an aktivem Chlor wird die Chlorzehrung ermittelt, d.h. das Mass der Chlorabnahme ist Mass für stattgefundene Oxidation.

Zusatz von mg $Cl_2$/l

| | 15 | 30 | 45 | 90 | 15 |
|---|---|---|---|---|---|
| Chlorzehrung in % nach | | | | | Blindprobe ohne Harnstoffe |
| 0,5 h | 2,6 | 2 | 0 | | Keine Zehrung |
| 1,0 | 12 | 11 | 11 | | Keine Zehrung |
| 3,0 | 26 | 12 | 31 | | Keine Zehrung |
| 16,0 | — | — | — | 61 | Keine Zehrung |
| 24,0 | 95 | 84,5 | 82 | | Keine Zehrung |
| 40,0 | | | | 69 | Keine Zehrung |

Ein weiterer Versuch wird mit Chlorung des Versuchswassers mit anschliessender Aktivkohle-Behandlung und vorheriger Chlorung durchgeführt:

Zusatz von mg $Cl_2$/l

| | 30 | 60 |
|---|---|---|
| Chlorzehrung in % nach: | | |
| 16 h | 90 | 71 |

Dieses Versuchswasser wird einer Aktivkohle-Behandlung unterzogen. Aktives Chlor ist nicht mehr nachweisbar. Eine nochmalige Zugabe der gleichen Chlormengen wie oben bringt wiederum Chlorzehrungen von 50 und 33%

Dies ist ein Beweis, dass die 1. Oxidation nicht vollständig ablief.

In Fortführung der Versuchsreihe wird das nach der weiteren Chlorzugabe erhaltene Wasser über die Schaltung Aktivkohle-Filter, Mischbett-Ionenaustauscher filtriert. Ein Chlorgehalt nach dem Aktivkohle-Filter ist nicht nachweisbar und der Leitfähigkeitswert nach dem Mischbett beträgt 0,05 $\mu$ S/cm.

Der nach dem Mischbett erhaltene Ablauf mit obiger Leitfähigkeit wurde zur Kontrolle nochmal mit:

| 30 | 60 | ng $Cl_2$/l versetzt |
|---|---|---|

Die Chlorzehrung betrug nach 16 h

| 62 | und | 33,3% |
|---|---|---|

Trotz der ausgezeichneten Leitfähigkeit war weiterhin oxidierbare Substanz vorhanden.

*Versuchsreihe 2, erfindungsgemässe Aufbereitung*

Es wird das gleiche Versuchswasser und die Blindprobe wie in der Versuchsreihe 1 verwendet. Dazu wird das Versuchswasser auf 80°C erwärmt und der pH-Wert auf grösser 9 eingestellt, z.B. auf 9,8.

Zugabe von mg $Cl_2$/l

| | 120 | |
|---|---|---|
| Chlorzehrung in % nach | Versuchswasser | Blindprobe ohne Harnstoff |
| 0,5 h | 58% | 9,2 |
| 1,0 | 85% | 28 |
| 1,5 | 86% | 30 |
| 2 | 88% | 32 |

pH-Wert nach dem Abkühlen auf 25°C

     7,65         9,6

Nach einer anschliessenden Filtration mit Aktivkohle und einem Mischbett-Ionentauscher hat das Versuchswasser eine Restleitfähigkeit von 0,05 $\mu$ S/cm.

Zur Endkontrolle wurde der Ablauf aus dem Mischbettfilter nochmals mit 120 mg $Cl_2$/l versetzt und nach einer Einwirkzeit von 16 h bei Raumtemperatur die Chlorierung geprüft. Dabei ergab sich überraschenderweise für das Versuchswasser eine Chlorzehrung von 0%, d.h. der gleiche Wert wie für die Blindprobe.

Der technische Fortschritt ergibt sich durch den Minderbedarf an Rohwasser für eine kombinierte Ammoniak- und Harnstoff-Produktionsanlage. So errechnet sich z.B. für eine solche Produktionsanlage mit einer Kapazität von 1000 tato Ammoniak und 1550 tato Harnstoff ein Reaktionswasseranfall aus der Harnstoffanlage von 46 m$^3$/h und ein Rohwasserbedarf für die Gesamtanlage von ca. 70 m$^3$/h, einschliesslich des Wasserbedarfs der Stromerzeugung über Dampfturbinengeneratoren für die Antriebe in der Produktionsanlage.

Wird das anfallende Reaktionswasser aus der Harnstoff-Produktionsanlage nach dem erfindungsgemässen Verfahren aufbereitet, kann die Rohwassermenge um 46 m$^3$/h auf 24 m$^3$/h reduziert werden.

**Patentanspruch**

Verfahren zur Aufbereitung von Kondensat aus Harnstoff-Produktionsanlagen mit einem Gehalt an Harnstoff in der Grössenordnung von 50 mg/l und an Biuret in der Grössenordnung von 2 mg/l durch Oxidation, dadurch gekennzeichnet, dass die vollständige Oxidation bei einer Temperatur des Kondensats über 60°C und einem pH-Wert über 8 durchgeführt wird.

**Claim**

Process for the treatment of condensate from urea production facilities having a urea content of 50 mg/l and a biuret content of 2 mg/l, by oxydation, characterized in that the complete oxidation is carried out at a condensate temperature of more than 60°C and a pH value of above 8.

**Revendication**

Procédé de traitement par oxydation du condensat des unités de production d'urée, dont la teneur en urée est de l'ordre de 50 mg/l et celle en biuret de l'ordre de 2 mg/l, caractérisé en ce que l'oxydation complète est effectuée à une temperature du condensat supérieure à 60°C et à une valeur pH supérieure à 8.